# EUROPEAN PATENT APPLICATION

(11) **EP 4 517 596 A1**
(43) Date of publication of application: **05.03.2025**
(21) Application number: 23194867.0
(22) Date of filing: 01.09.2023
(51) Int. Cl.: G06N 3/084, H04W 16/14, H04W 72/541, H04L 5/00

(54) **UPLINK INTERFERENCE NEURAL NETWORK-BASED LEARNING FOR SOUNDING RESOURCES DYNAMIC HANDLING**

(71) Applicant: Nokia Solutions and Networks Oy, 02610 Espoo (FI)
(72) Inventor: VERDIER, Denis, Versailles (FR); PARELLO, Rosalia, Versailles (FR)
(74) Representative: Nokia EPO representatives

(57) **Abstract**

In accordance with example embodiments of the invention there is at least a method an apparatus to perform determining a vector of uplink sounding channel resources in a cell at a user equipment position, wherein the vector of uplink sounding channel resources is associated with a sounding channel parameters configuration allocated to the user equipment for uplink transmissions; based on the determined vector of uplink sounding channel resources in the cell at the user equipment and a vector of uplink sounding channel resources of a neighboring cell, predicting a set of interference probabilities which forms an interference-based distribution due to uplink sounding channel resources in at least one neighbor cell; and based on the predicted set of interference probability, selecting a radio access network resources configuration vector associated with a sounding channel resource for the user equipment to counteract uplink interference in the radio access network.

## Description

### TECHNICAL FIELD:

The teachings in accordance with the exemplary embodiments of this invention relate generally to a new machine learning-dedicated bearer for machine learning or artificial intelligence related to techniques and apparatuses for data exchange over wireless communication systems, and more particularly to techniques and apparatuses in wireless communication access networks based on neural network-based UL interference learning.

### BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:
- CA: Carrier Aggregation
- DC: Dual Connectivity
- MUSIM: Multi Universal Subscriber Identity Module
- NTWK: Network
- PS: Packet Switched
- RACH: Random Access Channel
- RRC: Radio Resource Control
- Rx: Receiver
- TDM: Time Division Multiplexing
- Tx: Transmitter
- UAI: Assistance Information
- UE: User Equipment
- USIM: Universal Subscriber Identity Module

In communications networks, sensing approaches use statistics based on channel estimates (e.g., changes in the propagation environment). Typically, several channel estimates are made over time and machine learning techniques, or artificial intelligence, are applied to the channel estimates in order to make inferences and/or take decisions based on the changes in the propagation environment (e.g., regarding device positioning, radio environments, etc.).

In data communication, it can be desirable to enable as much transmitted power as possible to reach a receiver. Therefore, beamforming protocols may enable channel sounding, feedback of channel state information (CSI), precoding at the transmitter, etc.

Example embodiments of this invention proposes improved operations for at least the above including learning and predicting neural network to place objects using one or more neural networks.

### SUMMARY:

This section contains examples of possible implementations and is not meant to be limiting.

In another example aspect of the invention, there is an apparatus, such as a user equipment side apparatus, comprising: at least one processor; and at least one non-transitory memory storing instructions, that when executed by the at least one processor, cause the apparatus at least to: determine a vector of uplink sounding channel resources in a cell at a user equipment position, wherein the vector of uplink sounding channel resources is associated with a sounding channel parameters configuration allocated to the user equipment for uplink transmissions; based on the determined vector of uplink sounding channel resources in the cell at the user equipment and a vector of uplink sounding channel resources of a neighboring cell, predict a set of interference probabilities which forms an interference-based distribution due to uplink sounding channel resources in at least one neighbor cell, based on the predicted set of interference probability, select a radio access network resources configuration vector associated with a sounding channel resource for the user equipment to counteract uplink interference in the radio access network.

In still another example aspect of the invention, there is a method, comprising: determining a vector of uplink sounding channel resources in a cell at a user equipment position, wherein the vector of uplink sounding channel resources is associated with a sounding channel parameters configuration allocated to the user equipment for uplink transmissions; based on the determined vector of uplink sounding channel resources in the cell at the user equipment and a vector of uplink sounding channel resources of a neighboring cell, predicting a set of interference probabilities which forms an interference-based distribution due to uplink sounding channel resources in at least one neighbor cell, based on the predicted set of interference probability, selecting a radio access network resources configuration vector associated with a sounding channel resource for the user equipment to counteract uplink interference in the radio access network.

A further example embodiment is an apparatus and a method comprising the apparatus and the method of the previous paragraphs, wherein there is, based on an interference probability being above a probability target threshold, providing a best sounding channel resource allocation vector as classified with minimum interference impact among all predicted sounding channel resource allocation vectors for the user equipment position, wherein the probability target threshold is defined based on a load of the radio access network, wherein there is, determining an access network performance of the user equipment, wherein based on determining an access network performance of the user equipment is above a key performance indicator targeting, locking, and committing the selected radio access network resources configuration vector in a configuration of the radio access network, wherein there is, based on determining an access network performance of the user equipment is below a key performance indicator target, selecting a new sounding channel resources signal configuration as a new uplink sounding channel resources vector and fallback or use new uplink sounding channel resources vector to predict a new set of interference probabilities and select a new radio access network resources configuration vector, wherein the set of interference probabilities is predicted using a trained neural network comprising one input layer, one output layer and a plurality of hidden layers, wherein there is training the neural network to learn the interference-based distribution for a plurality of user equipment positions, wherein there is generating training data that maximizes at least a throughput data rate of a radio access network receiver performance at a specific user equipment metric position by collecting receiver performance simulation data into a data storage or collecting the inputs from access network that have been injected in receiver simulation to provide the training performance data, wherein the neural network stores performance simulations for a specific sounding resource allocation vector and a user equipment position, wherein the user equipment metric position comprises at least one of a path loss or signal to noise ratio as a path loss function, wherein the determining is based on anomaly detection based on performance disruption of an established call configured with a given sounding channel resource allocation vector while an uplink received signal power or beam energy is measured with no user equipment radio conditions variations, wherein the user equipment radio conditions variations comprise long term frequency doppler estimation measurement proving user equipment in stable static condition or in a low speed, wherein the interference-based distribution is based on aggressor sounding resources vector, wherein the sounding channel is used as input of an algorithm type comprising at least one of uplink timing correction, uplink synchronization, rank uplink prediction, channel estimate, or uplink beam space direction input, wherein the probability of interference is based on whether there is a cyclic shift collision or whether there is power leakage from adjacent cyclic shift, wherein the minimum interference is based on a smallest probability of collision of power leakage from an adjacent cyclic shift, wherein the sounding resource allocation vectors comprise at least one of a sounding reference signal, a reqDomainPosition, a combOffset, or a cyclic Shift vector, wherein the predicting a set of interference probabilities of the feature set comprises a classification score based on a set of probabilities, wherein each probability of the set is a probability of the input data, including the feature from the set of features, and/or wherein a combination of the user equipment position and sounding resource allocation vectors with a probability of interference based on a block error rate below a key performance indicator target is chosen as a classification result causing the neural network to recognize correlations between features and optimal results.

A non-transitory computer-readable medium storing program code, the program code executed by at least one processor to perform at least the method as described in the paragraphs above.

In yet another example aspect of the invention, there is an apparatus comprising: means for determining a vector of uplink sounding channel resources in a cell at a user equipment position, wherein the vector of uplink sounding channel resources is associated with a sounding channel parameters configuration allocated to the user equipment for uplink transmissions; means, based on the determined vector of uplink sounding channel resources in the cell at the user equipment and a vector of uplink sounding channel resources of a neighboring cell, for predicting a set of interference probabilities which forms an interference-based distribution due to uplink sounding channel resources in at least one neighbor cell; and means, based on the predicted set of interference probability, for selecting a radio access network resources configuration vector associated with a sounding channel resource for the user equipment to counteract uplink interference in the radio access network.

In accordance with the example embodiments as described in the paragraph above, at least the means for determining, predicting, and selecting comprises a network interface, and computer program code stored on a computer-readable medium and executed by at least one processor.

A communication system comprising the network side apparatus and the user equipment side apparatus performing operations as described above.

### BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:
FIG. 1 shows a wireless access network design in accordance with example embodiments of the invention using intelligent resources allocation by integrating fast learning and efficient Artificial neural networks resource optimized prediction to minimize uplink interference;
FIG. 2 shows inputs which are outputs from a previous layer multiplied by weights, a bias added to this sum, and a nonlinear function known as activation function applied to a result;
FIG. 3A, FIG. 3B, and FIG. 3C each show communications in different cells between cell towers and UE where FIG. 3C shows with the communications a neural network structure experiencing uplink interference from a UE;
FIG. 4 shows an example of a possible solution in accordance with example embodiments of the invention for the optimal sounding channel resources configuration vector choice to maximize performance in terms of lowest BLER or max cell throughput rate;
FIG. 5 shows operation layers of a neural network structure in accordance with example embodiments of the invention;
FIG. 6 shows a high level block diagram of various devices used in carrying out various aspects of the invention; and
FIG. 7 shows a method in accordance with example embodiments of the invention which may be performed by an apparatus.

### DETAILED DESCRIPTION:

In example embodiments of this invention there is proposed at least a method and apparatus for a new machine learning-dedicated bearer for machine learning or artificial intelligence related to techniques and apparatuses for data exchange over wireless communication systems based on neural network-based UL interference learning.

Wireless communications systems design and deployment aim to provide multiple telecommunications services and may include a number of base stations (BSs) providing cell coverage to support communications for a number of user equipment (UEs). A user equipment (UE) or mobile terminal may communicate with a base station (BS) or network element via the downlink and uplink. The downlink refers to the communications link from the BS to the UE, and the uplink refers to the communications link from the UE to the BS.

Wireless Access Network design and dimensioning are based on simultaneous multi resources approach in multiple access and rely on the univocity of the resource allocated to each among all served users. The optimized handling of allocated resources is a fundamental factor to guarantee the target service quality offered to users on the network.

Multiple-access technologies could include different multiplexed resources variants, such as code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD- SCDMA) systems, and long term evolution (LTE). LTE/ LTE-Advanced is a set of enhancements to the universal mobile telecommunications system (UMTS) mobile standard promulgated by the Third Generation Partnership Project (3GPP).

At Physical Layer on radio access network air interface, in multi resources approach for multiple access a resource could be represented by a vector of resources to handle the communication, to transmit and receive on the available channel, e.g. a certain time (as in TDMA), a specific frequency band (as in FDMA), a dedicated electromagnetic wave in a specific beam space direction, a particular mathematical resource, e.g. orthogonal Walsh-Hadamard code (as in CDMA), or specific reference signal resources, e.g. CAZAC (Constant Amplitude Zero AutoCorrelation) sequence cyclic shift. This resources usage applies to the signal emitted on transmitter side and is used as reference in the receiver side to discriminate it from other coming signals (same applies to User equipment or Base Station transmitter and receiver).

From radio Access Network users handling perspective, the orthogonality properties of signal propagation statistics allow to discriminate each among all served users. It allows to achieve the quality target and adequate acceptable user perception.

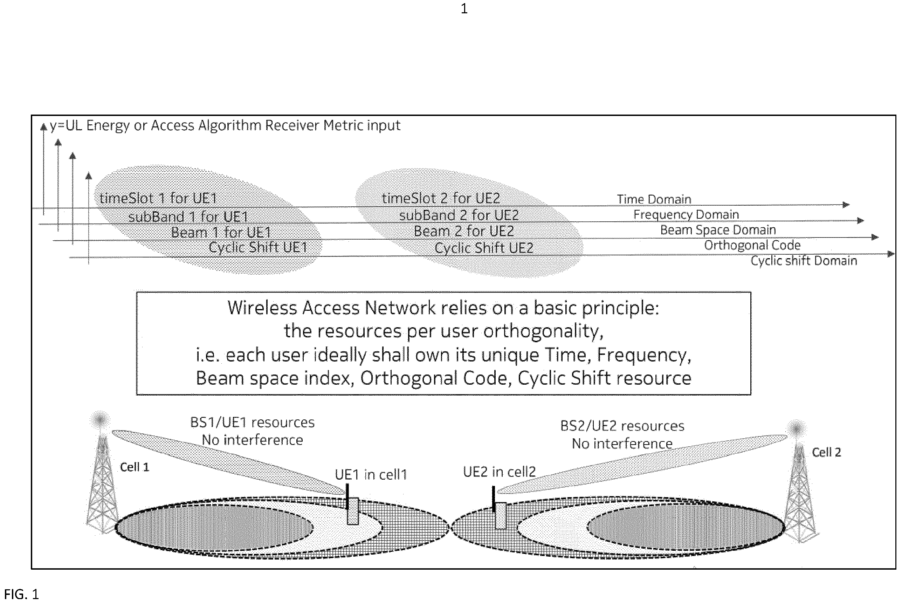

FIG. 1 shows a wireless access network design in accordance with example embodiments of the invention using intelligent resources allocation by integrating fast learning and efficient Artificial neural networks resource optimized prediction to minimize uplink interference. As shown in FIG. 1 there is a UL energy or access receiver metric input, at a timeslot 1 over a time domain, subBand 1 over a frequency domain, beam 1 over a beam space domain, and cyclic shift with an orthogonal code over a cyclic shift domain for a UE1 and at a timeslot 2 over the time domain, subBand 2 over the frequency domain, beam 2 over the beam space domain, and cyclic shift with an orthogonal code over the cyclic shift domain. As shown in FIG. 1 the wireless access network relies on basic principle: the resources per user orthogonality, i.e., each user ideally shall own its unique Time Frequency Beam space index, Orthogonal code, Cyclic Shift resource. Further, as shown in FIG. 1 in accordance with example embodiments of the invention the at cell1 the BS1/UE1 resources are communicated with No interference, and the at cell2 the BS2/UE2 resources are communicated with No interference.

Wireless Access Network design could benefit from intelligent resources allocation by integrating fast learning and efficient Artificial neural networks resource optimized prediction to minimize UL interference.

A neural network is an artificial neural network comprising a given number of hidden layers between the input layer and the output layer. Artificial neural networks may include interconnected groups of artificial neurons. Training of the neural network allows it to find the correct mathematical manipulation to transform the input into the proper output even when the relationship is highly nonlinear and/or complicated.

The artificial neural network may be a computational device or represented as a method to be performed by a computational device. A set of rules or functions that are designed to execute tasks such as regression, classification, clustering, and pattern recognition are comprised in the artificial neural network.

Such objectives are achieved by the artificial neural network through a training (learning) procedure by processing examples, each of which contains a known input and result, forming probability-weighted associations between the two, which are stored within the data structure of the net itself. The training of a neural network from a given example is conducted by determining the error between the processed output of the network (prediction) and a target output. The network then adjusts its weighted associations according to a learning rule and using this error value. Successive adjustments allow the neural network to produce output that is increasingly similar to the target output. After a sufficient number of these adjustments, the training can be terminated based on certain criteria. Learning by using labels is called supervised learning and learning without labels is called unsupervised learning. Deep learning typically requires a large amount of input data.

Applying neural network-based UL interference learning to wireless communications in radio access networks allow to identify dynamically the optimized resources configuration, for each physical channel in radio access interface.

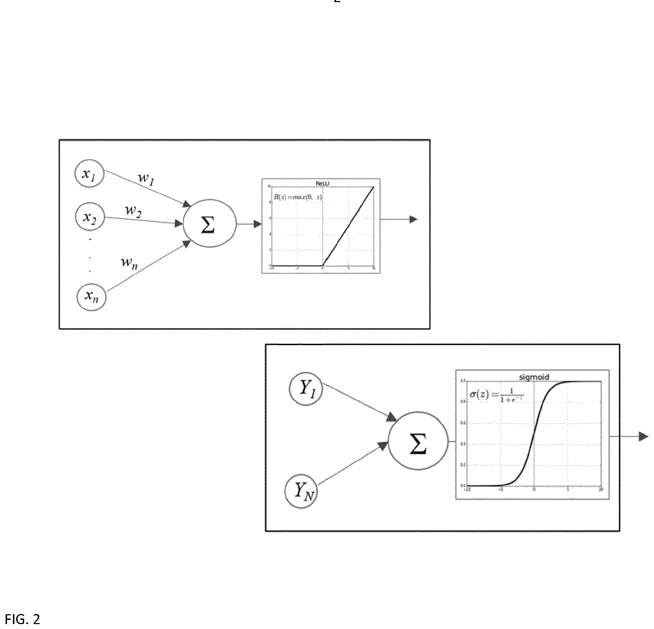

FIG. 2 shows inputs which are outputs from a previous layer multiplied by weights, a bias added to this sum, and a nonlinear function known as activation function applied to a result.

As shown in FIG. 2 in neural network each network neuron (except those in the input layer) is actually a sum of all its inputs; which are in fact the outputs from the previous layer multiplied by some weights. An additional term called bias is added to this sum. And a nonlinear function known as activation function is applied to the result.

Initial weights can be set based on different approaches. During the training phase they are adapted to improve the accuracy of the process based on analysing errors in decision making. In principle, each node of the neural network makes a decision from the input multiplied by a weight, and then compares this decision to collected data to find out the difference to the collected data. That means it determines the error, based on which the weights are adjusted.

The training phase is performed by using a stochastic gradient descent optimization algorithm for which the gradients are calculated using the backpropagation algorithm. The gradient descent algorithm looks for changing the weights so that the next evaluation decreases the error. The optimization algorithm is navigating down the gradient, the slope, of error.

Any other suitable optimization algorithm, e.g. momentum, could be used for more efficient and accurate weights.

The function used to define the set of weights is referred to as the objective function.

As the neural networks target is to minimize the error, the objective function is referred as a cost function or a loss function. The higher the loss, the poorer the performance of the neural network, that is why minimize the loss allows neural network performing better. The process of minimizing loss is called optimization. In adjusting weights, any suitable method may be used as a loss function, some examples are mean squared error (MSE), maximum likelihood (MLE), and cross entropy.

As for the activation function of the node it defines the output of that node given an input or set of inputs. The node calculates a weighted sum of inputs, perhaps adds a bias and then makes a decision as "activate" or "not activate" based on a decision threshold as a binary activation or using an activation function that gives a nonlinear decision function. Any suitable activation function may be used, for example sigmoid, rectified linear unit (ReLU), normalized exponential function (soft- max), sotfplus, tanh, etc. In deep learning, the activation function is usually set at the layer level and applies to all neurons in that layer. The output is then used as input for the next node and so on until a desired solution to the original problem is found.

Wireless transmission of the mobile terminals and network elements typically cause interference to other transmissions of the network due to multiple factors subjects of constant optimization study: mismanaged UL power transmission, increased amount of UEs in near-far condition, different types of Base station receivers on different network layouts, different layers in planned network, overlapping cells coverage footprints as due to noise rise shrinkage effect in loaded access network.

A continuous UL interference learning could become a dominant factor and plays a key input in access network handling. An efficient approach by optimizing UL channels related parameters is based on dynamic adaptation from changed mobility and access network conditions. This could be based on Artificial Neural Networks.

From Access Network users handling perspective, the (mathematical) orthogonality properties of signals statistics propagation allow to discriminate each among all served users. It allows to achieve the quality target and adequate acceptable user perception.

The limited number of available resources with respect to the traffic demand tremendously increasing, and high user mobiles penetration imply necessarily the resources re-usage. At the receiver the loss of orthogonality of (mathematical) properties compromises the original transmitted signal statistics integrity that means the corruption of data carried by the original signal.

Among the served users the probability of allocated resources collisions increases in daily life of a network. The interference induced on the reference signal of served communication dynamically changes and could not be avoided even in well optimized cell planning coverage dimensioning, as consequence of many factors specific of each single access network: re-newed user traffic models for different vastly changing services demand, different users mobility, specific characteristics of access network topology and cell planning dimensioning and optimization needed changes. Different types of Base station receivers on different network layouts, different layers in planned network, different coverage approach, high request of flexible approach to adapt allocation of resources.

The interference shall be fast learnt, handled and successfully reduced to achieve the predefined target quality and avoid user perception degradation in the right extent.

3GPP standard specification describes the signaling mechanism to send sounding channel configuration parameters from a base station to the user equipment. This generates the UL sounding reference signal defined by the set of parameters: mainly the allocated time (e.g. OFDM symbol in LTE/NR), the sub-band or subcarrier in frequency, the beam space (in technology based on beamforming approach), or specific reference signal resource, e.g. CAZAC (Constant Amplitude Zero Auto Correlation) sequence Cyclic Shift (CS).

UEs which are assigned to different sets of frequencies, transmit reference signals on subcarriers and achieve separability of the reference signal via frequency division multiplexing. However, UEs could be assigned to transmit on the same set of subcarriers. In these cases, the reference signals can interfere with each other, and the separation the reference signals from the different transmitters is needed. The orthogonality between reference signals occupying the same set of subcarriers id provided by exploiting the fact that the correlation of a mathematic sequence (CAZAC) with any Cyclic Shift (CS) of the same sequence is zero. From mathematical perspective the Cyclic shift is equivalent to a phase rotation in the frequency domain of same reference signal base sequence.

The base sequence is cyclic shifted to increase the total number of available sequences which orthogonality properties depend on different factors: UL signal timing misalignment or as effect of the channel delay spread, i.e. secondary echoes due signal energy dispersion in time leaking into neighboring cyclic shift.

In the particular case of LTE and NR the Sounding Reference (SRS) Signal plays a key role. Also because TDD is dominant mode of deployment. In TDD, gNB can utilize the channel estimation result from SRS not only for UL scheduling but also for DL scheduling. With increased UEs amount in the network, limiting Sounding channel Sub band range for different cells would be not enough to avoid interference, i.e. CS re-usage in same time and frequency allocation could occurs.

Loss of orthogonality and Sounding Channel reference signal resources collision compromises the capabilities of Base Station receiver to discriminate UE signal or correct beam direction. UL interference in the cell due to orthogonality loss for CS power leakage, or for collision due to Cyclic shift re-usage in neighboring cell, can be minimized by several cyclic shifts spacing and frequency SRS sub band position configuring accordingly.

Actually, even in case of optimal but static Sounding Channel reference signal resources cyclic shifts spacing approach, due to increased presence of UEs in near-far condition, in overlapped cells coverage footprints (i.e. as due to noise rise shrinkage effect in loaded access network), the re-usage of same Cyclic Shifts in neighboring cells could not be avoided. A static Sounding Channel reference signal resources Cyclic Shifts spacing could lead to performance degradation while high received strength power measured for the generated Cyclic Shift.

Moreover, in case of beamforming functionality, the receiver which computes from signal received strength the beam space direction, could mislead high level of power coming from wrong direction carried by colliding resource resulting in handled UE beam instability observations.

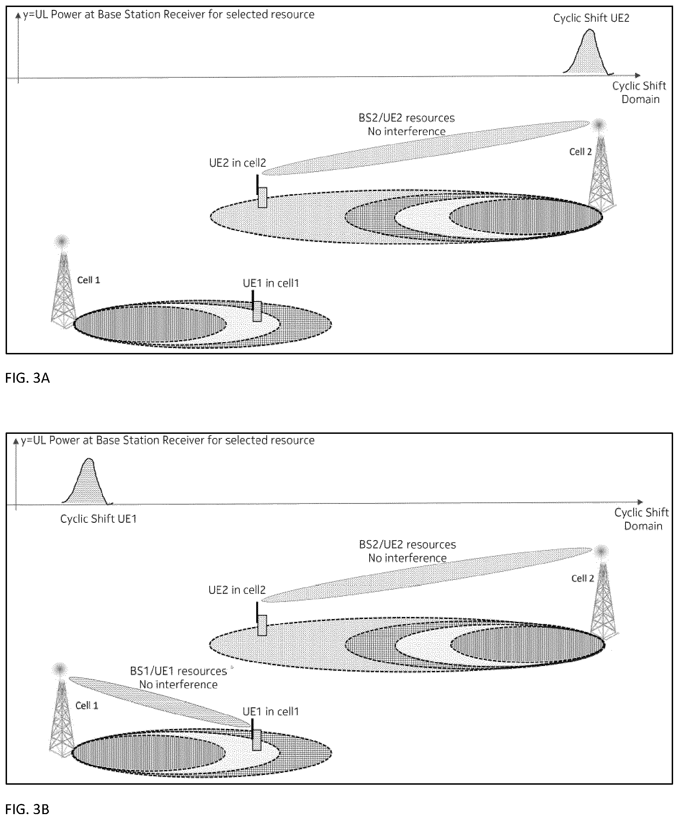

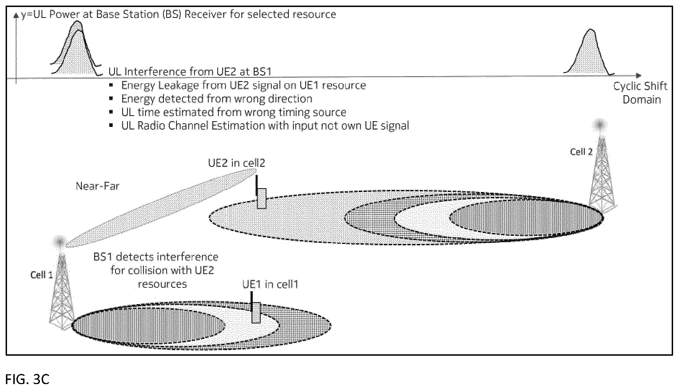

FIG. 3A, FIG. 3B, and FIG. 3C each show communications in different cells between cell towers and UE where FIG. 3C shows uplink interference and/or power leakage in an uplink from a UE.

In the examples in FIG. 3A, FIG. 3B, and FIG. 3C, UE1 served by gNB1 is allocated UL SRS CS1, and UE2 served by gNB2 is also allocated UL SRS CS1. In this scenario the two UEs sounding channels are totally indistinguishable at each of the neighbour gNBs and mislead the gNBs to believe that the estimated conditions are better than they actually are. As a result, the gNBs do suboptimal resource allocation and this results in degraded performance at each of the 2 UEs.

In particular, highly directional interference at the cell edge may reduce the data rate and negatively impact a user experience, e.g. inducing high variant beam choice or any other not correct scheduler algorithm choice. High variance in the interference makes it more difficult to perform link adaptation, such as predicting a supportable modulation and coding scheme (MCS).

In accordance with one example embodiment of the invention there is provided a solution of wireless communication that includes using a learning and predicting neural network with input the radio access network parameters for selection of dynamically optimized UL sounding resources allocation to counteract UL interference in a radio access network. The solution determines from actual radio access network resources configuration vector, a selection of radio access network configuration variables.

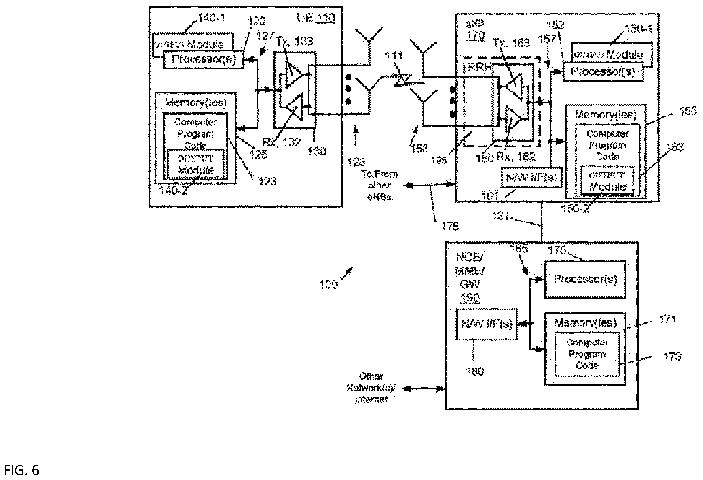

Before describing the example embodiments as disclosed herein in detail, reference is made to FIG. 6 for illustrating a simplified block diagram of various electronic devices that are suitable for use in practicing the example embodiments of this invention.

FIG. 6 is a block diagram of one possible and non-limiting system in which the example embodiments may be practiced.

Turning to FIG. 6, this figure shows a block diagram of one possible and non-limiting example in which the examples may be practiced. A user equipment (UE) 110, and a radio access LTE, 5G, or 6G network base station i.e., gNB 170, and NCE/MME/GW 190 are illustrated. In the example of FIG. 6, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a output module 140, comprising one of or both parts 140-1 and/or 140-2, which may be implemented in a number of ways. The output module 140 may be implemented in hardware as output module 140-1, such as being implemented as part of the one or more processors 120. The output module 140-1 may be implemented also as an integrated circuit or through other hardware such as a programmable gate array. In another example, the output module 140 may be implemented as output module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with gNB 170 via a wireless link 111.

The gNB 170 in this example is a base station that provides access by wireless devices such as the UE 110 to the wireless network 100. The gNB 170 may be, for example, a base station for 5G, also called New Radio (NR). In 5G, the gNB 170 may be a NG-RAN node, which is defined as either a gNB or an ng-eNB or an en-gNB. A gNB is a node providing NR user plane and control plane protocol terminations towards the UE, and connected via the NG interface to a 5GC (such as, for example, the NCE/MME/GW 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting radio resource control (RRC), SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the gNB 170 and centralized elements of the gNB 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The gNB 170 may also be an eNB (evolved NodeB) base station, for LTE (long term evolution), or any other suitable base station or node.

The gNB 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The gNB 170 includes a output module 150, comprising one of or both parts 150-1 and/or 150-2, which may be implemented in a number of ways. The output module 150 may be implemented in hardware as output module 150-1, such as being implemented as part of the one or more processors 152. The output module 150-1 may be implemented also as an integrated circuit or through other hardware such as a programmable gate array. In another example, the output module 150 may be implemented as output module 150-2, which is implemented as computer program code 153 and is executed by the one or more processors 152. For instance, the one or more memories 155 and the computer program code 153 are configured to, with the one or more processors 152, cause the gNB 170 to perform one or more of the operations as described herein. Note that the functionality of the output module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 receiver for gNB implementation for 5G, with the other elements of the gNB 170 possibly being physically in a different location from the RRH/DU, and the one or more buses 157 could be implemented in part as, for example, fiber optic cable or other suitable network connection to connect the other elements (e.g., a central unit (CU), gNB-CU) of the gNB 170 to the RRH/DU 195. Reference 198 also indicates those suitable network link(s).

It is noted that description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality. Further, this NCE/MME/GW 190 can for example perform Access & Mobility Management Function (AMF), Location Management Function (LMF), Mobility Management Entity (MME), Network Control Element (NCE), Policy Control Function (PCF), Serving Gateway (SGW), Session Management Function (SMF), and Unified Data Management (UDM). The NCE/MME/GW 190 provides connectivity via a link or links 181 with a further network, such as a telephone network and/or a data communications network (e.g., the Internet). Such core network functionality for 5G may include access and mobility management function(s) (AMF(S)) and/or user plane functions (UPF(s)) and/or session management function(s) (SMF(s)). Such core network functionality for LTE may include MME (Mobility Management Entity)/SGW (Serving Gateway) functionality. These are merely example functions that may be supported by the NCE/MME/GW 190, and note that both 5G and LTE functions might be supported. The gNB 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, gNB 170, NCE/MME/GW 190, and other functions as described herein.

In general, the various embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

One or more of output modules 140-1, 140-2, 150-1, and 150-2 may be configured to implement high level syntax for a compressed representation of neural networks based on the examples described herein. Computer program code 173 may also be configured to implement high level syntax for a compressed representation of neural networks based on the examples described herein.

Further, the various embodiments of any of these devices can be used with a UE vehicle, a High Altitude Platform Station, or any other such type node associated with a terrestrial network or any drone type radio or a radio in aircraft or other airborne vehicle or a vessel that travels on water such as a boat.

The present disclosure generally relates to wireless communication systems, and more particularly to techniques and apparatuses in wireless communication access networks based on neural network-based UL interference learning.

A solution of wireless communication for selection of dynamically optimized UL sounding resources allocation to counteract UL interference in a radio access network. The solution determines from actual radio access network resources configuration vector, a selection of radio access network configuration variables . It includes a learning and predicting neural network with input the radio access network parameters. The predicted output and the target output delta represents the error to minimize for the selected set of resource allocation (i.e. sounding channel parameters configuration). Embodiments of the present disclosure aims reducing the UL interference from adapted resources configuration improving the cell throughput performance in the access network.

According to previous aspects, the usage of neural network training to infer the impact of UL interference from signal resources (CS) re-usage consequence. Once the neural network is trained to infer the impact of a UL interference of a neighbor base station, a network device (e.g., gNB or centralized node) predicts interference and then may coordinate with the neighbor base station to reduce the interference.

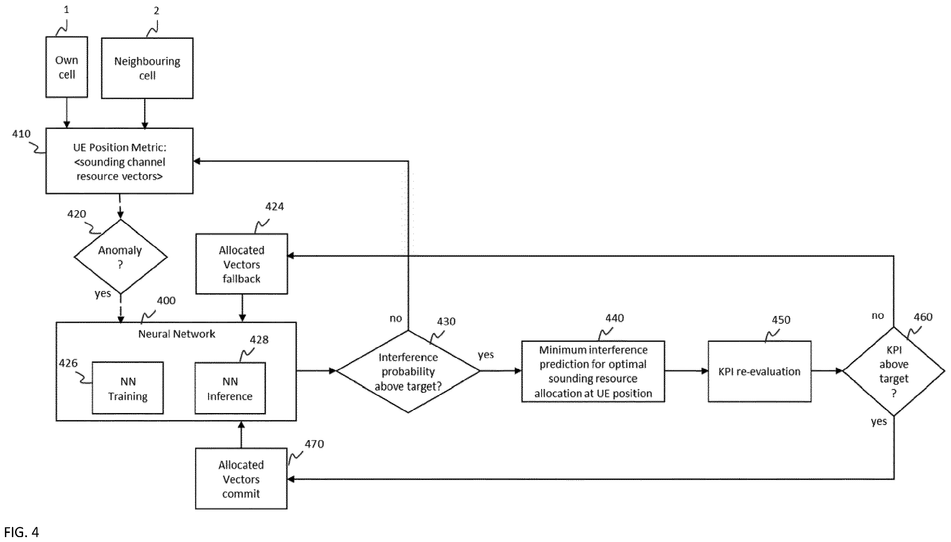

FIG. 4 shows an example of a possible solution implemented at an apparatus in accordance with example embodiments of the invention for the optimal sounding channel resources configuration vector choice to maximize performance in terms of lowest BLER or max cell throughput rate.

In particular, FIG. 4 shows a NN with a feedback loop in which the SRS codes CS are tuned until the UE performance is improved. So, the method starts with some random SRS configuration (freqDomainPosition, cyclicShift) and outputs a probability of collision. Then, using this probability, the resources are allocated and the UE performance is evaluated. If the performance is above target, the config is locked (i.e. Vector commit). If the performance is below target, a new SRS config is selected (Vector fallback), using also the current interference state information.

As shown in FIG. 4 is a configuration using an own cell 1 and a neighboring cell 2. As shown in block 410 of FIG. 4 at a specific UE position at least one vector of uplink sounding channel resources is determined. The UE position is defined by a UE position metric. Preferably, the UE position metric comprises a path loss or signal to noise ratio as a path loss function. The determined at least one vector of uplink sounding channel resources forms the input to a neural network 400 (i.e., NN inference 428), which has been trained (in Fig. 4, at block 426) to predict a set of interference probabilities. As shown in block 430 of FIG. 4 it is determined if the predicted interference is above a probability target. If yes, as shown in block 440 of FIG. 4 there is minimum interference prediction for optimal sounding resource allocation at UE position. This represents the best sounding channel resource allocation vector as classified with minimum interference impact among all predicted sounding channel resource allocation vectors for the user equipment position.

As shown in block 450 of FIG. 4 there is an access network key performance indicator (KPI) re-evaluation and/or evaluation. As shown in block 460 of FIG. 4 it is determined whether KPI is above a target. If no, then as shown in block 424 of FIG. 4, a new sounding channel resources signal configuration is selected as a new uplink sounding channel resources vector which is used as input to the neural network to predict a new set of interference probabilities and repeat the above-described process. If the access network performance of the user equipment as determined at 450 is above a key performance indicator target -- yes at block 460 --, then as shown in block 470 of FIG. 4 the selected radio access network resources configuration vector is locked and committed in a configuration of the radio access network.

In a further embodiment, as shown in block 420 of FIG. 4, an optional anomaly detection step is performed as a preliminary condition to be verified before triggering the neural network in a varying interference radio access network context. The neural network-based interference prediction is only then started if a network anomaly was detected. The anomaly detection step may be implemented by determining or monitoring performance disruption of an established call configured with a given sounding channel resource allocation vector while an uplink received signal power or beam energy is measured with no user equipment radio conditions variations.

The anomaly detection method may be adopted to trigger the neural network only when an unexpected peak of Block Error Rate or sudden degraded cell throughput occurs while good radio conditions are measured by base station for corresponding UE position metrics.

For example, it may correspond, on an established call configured with a given sounding channel resources (e.g. SRS freqDomainPosition, combOffset, cyclicShift) vector, to an abrupt performance disruption while high UL received signal Power (or beam energy) is measured with no UE radio conditions variations, e.g. long term frequency doppler estimation measurement at base station proving UE in stable static condition or in low speed.

The optional anomaly detection method is facilitating a more efficient usage of the neural network, as it increases the efficiency of the neural network learning/inference feedback loop, otherwise always performed.

### Input

Based on UE position the neural network in base station could predict an interference distribution of problematic position in the cell for a given resources configuration vector related to the sounding channel (e.g. SRS), used by the base station receiver as input of any algorithm type, e.g. UL timing correction, or UL Synchronization, or rank UL prediction, or Channel Estimate, or UL Beam space direction input.

The UE position in the cell could be defined by one or all variables from the UE position metric vector:
Path Loss (Channel attenuation) and/or
Received Signal power for a specific Path Loss (and/or for a specific beam space) and/or
Sounding Channel Covariance matrix in case of beamforming for a specific Path Loss
   and/or
Channel Estimation Response for a specific Path Loss and/or for a specific beam for 3GPP Path Loss (e.g. LOS, NOS) and Channel Model (e.g. 38.901 CDL-C, CDL-D for LOS or NLOS).

For example, based on UL Path Loss (or UE position metrics vector), that base station could compute from UE transmitted power (e.g. UE PHR, Power Head Room, signaled on air radio interface via MAC protocol layer as per 3GPP definition) compared to the received signal power measured at the base station, the neural network in base station could predict an interference distribution of problematic Path Loss (or problematic UE position metrics vector) in the cell for a given sounding configuration resources vector (e.g. SRS freqDomainPosition, combOffset, cyclic Shift) for the own cell and for the cells in neighboring cluster.

### NN Training

For the Neural Network assigned training, the neural network stores from the base performance simulations for a specific sounding channel resources vector and UE position (e.g. PL or SNR as PL function) with and without interference, that means with IoT (Interference over Thermal) or INR (Interference to Noise Ratio) equal to 0 (no interference, e.g. no collision or no power leakage from cyclic shift) or not equal to 0 (interference, e.g. collision or power leakage from adjacent cyclic shift).

The training may be carried out by collecting the receiver performance simulation data into a data storage or by collecting the inputs from the access network that have been injected in receiver simulation to provide the training performance data, that maximize the optimum receiver performance in terms of the throughput data rate at specific of UE metric position e.g. PL or SNR as PL function.

The neural network is so either trained at base station or the neural network weights are shared among neighboring base stations.

For the Neural Network training objective, it may be assumed that the base stations in a cluster of cells share their configurations, so when a measurement is performed, the base stations may determine interference associated to the sounding channel configuration resources vector to which the measurement corresponds.

### Inference

Based on the UE position in the cell and the neighbor cell inputs, the neural processing engine predicts an interference-based distribution for the current position of the UEs. For example, the neural network at the base station is used to predict the interference-based distribution at a given UE position due to an aggressor sounding resources.

The inference may be performed for an exhaustive set of sounding channel resources vectors. For example, assuming a certain allocation of the joint sounding channel resources vectors (SRS freqDomainPosition, combOffset, cyclic Shift) for the cell and the neighboring cell, the neural network predicts for a given UE position an interference for each of sounding channel resources vectors for the own cell.

Each input (UE position, sounding channel resources vector) pair is taken as an input for the training phase of neural network, which is configured to produce the UE position, sounding channel resource vector combination.

Each input set (UE position, sounding channel resources vector) may be encoded into a numerical class indicator to allow the neural network outputting probabilities for the optimality of the different (UE position, sounding channel resources vector) parameter combination.

Indeed, the classification score can be seen as a set of probabilities, where each probability is the probability of the input data, including the feature from a set of features, in our case the (UE position, sounding channel resources vectors) combination: the one with the lowest probability of interference (BLER below target) is chosen as the classification result. In the process, the neural network learns to recognize correlations between the features and optimal results.

The reference performance metric to optimize the output is the lowest interference, that means highest throughput data rate (BLER below target). The produced sounding resources vector gives the lowest probability of interference (e.g. minimum collision or min power leakage from adjacent cyclic shift).

Once the interference is predicted, it could be used to identify the problematic resources (BLER above target) due to sounding resource allocated to UE as interfered from neighboring cells (e.g. cyclic shift collision or power leakage from adjacent cyclic shift). When a new measurement is provided to the neural network, in response the neural network makes prediction for a given UE position for classified problematic working zones/resources (UE metric position vs. Sounding channel configuration resources vectors). The neural network predicts for the given UE position (e.g. Path Loss) interference probabilities for all Sounding channel resources vectors, providing as response the best to be proposed as classified with minimum interference (smallest probability of collision of power leakage from adjacent cyclic shift) impact.

Once predicted, if probability of interference (e.g. no cyclic shift collision or no power leakage from adjacent cyclic shift) is below probability target threshold, no other actions are propagated to access network. The rational is to minimize the risk of useless signaling from base station to UE for unnecessary change of Sounding resource allocation, e.g. collision false alarm.

The probability target threshold could be defined depending on the load of the access network.

If interference probability is above target threshold, this will trigger the proposal to access network to modify current Sounding resource allocation configuration, e.g. via RRC signaling, allowing to get rid of aggressor interference on allocated colliding resources.

If interference probability is above target threshold, the neural network provides/proposes the best sounding resource allocation as classified with minimum interference (smallest probability of collision of power leakage from adjacent cyclic shit) impact among all predicted sounding resource allocation vectors for a given UE position.

The model can be seen as a feedback loop in which the Sounding Channel Resources Vector (e.g. SRS freqDomainPosition, comb Offset, cyclicShift) are tuned until the UE (KPI access network) performance is improved. If the performance is above target, the config is locked (i.e. Vector commit). If the performance is below target, a new SRS config is selected (Vector fallback), using also the current interference state information.

The usage of neural network resource vectors output is than propagated and configured to be changed on the radio access network. An observation time window period is started to monitor Key Performance Indicators compared to the target performance. The key performance metrics are calculated and compared to metrics obtained earlier using the configuration that led to UL interference detection (cell throughput degradation). If performance is higher, the new resources configuration are committed as confirmed.

### NN implementation

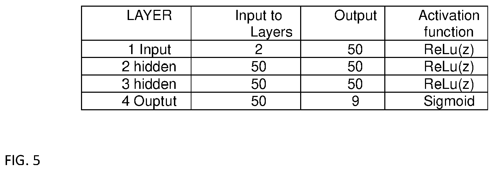

FIG. 5 shows operation layers of a neural network structure in accordance with example embodiments of the invention.

In the current approach as shown in FIG. 5 the neural network includes 4 layers in total: 1st layer input, 2 hidden layers, 1 output layer and 2 inputs: UE position Metric (e.g. Path Loss and/or Signal to Noise Ratio for a specific Path Loss, and/or Received Signal power for a specific Path Loss, and/or Sounding Channel Covariance matrix in case of beamforming for a specific Path Loss and/or Channel Estimation Response for a specific Path Loss and or for a specific beam) Vector, Sounding Channel Configuration Resources (i.e. freqDomainPosition, comb Offset, cyclic Shift) Vector.

For the hidden layers the rectified linear unit (ReLU) as activation function is applied. For the output layer a sigmoid function to map the output to class probabilities, there are two input features, which are mapped into a prediction among a given number of classes, each class representing a certain combination of 2 inputs.

The optimal Sounding Channel Resources Vector represents a label, i.e., the output of the neural network. It may be noted that each vector may be encoded into a numerical class indicator, and therefore the neural network essentially outputs probabilities for the optimality of the different Sounding Channel Resources Vector parameter. The one with the highest probability is typically chosen as the classification result.

This implementation is just an example of possible neural network structure.

The feedback from real networks observation could allow to finetune the output of the neural network improving the prediction precision or any new change on the real network.

Applying neural network-based UL interference learning to wireless communications in radio access networks allow to identify dynamically the optimized resources configuration, for each physical channel in radio access interface.

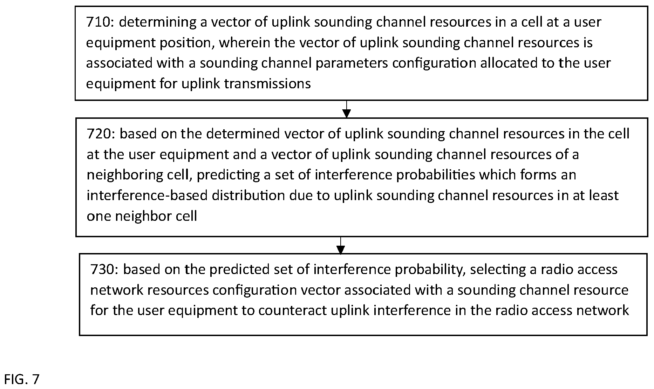

FIG. 7 shows a method in accordance with example embodiments of the invention which may be performed by an apparatus.

FIG. 7 illustrates operations which may be performed by a device such as, but not limited to, a device such as a network device (e.g., the UE 110 as in FIG. 6). As shown in block 710 of FIG. 7 there is determining a vector of uplink sounding channel resources in a cell at a user equipment position, wherein the vector of uplink sounding channel resources is associated with a sounding channel parameters configuration allocated to the user equipment for uplink transmissions. As shown in block 720 of FIG. 7 there is, based on the determined vector of uplink sounding channel resources in the cell at the user equipment and a vector of uplink sounding channel resources of a neighboring cell, predicting a set of interference probabilities which forms an interference-based distribution due to uplink sounding channel resources in at least one neighbor cell. Then as shown in block 730 of FIG. 7 there is, based on the predicted set of interference probability, selecting a radio access network resources configuration vector associated with a sounding channel resource for the user equipment to counteract uplink interference in the radio access network.

In accordance with the example embodiments as described in the paragraph above, wherein there is, based on an interference probability being above a probability target threshold, providing a best sounding channel resource allocation vector as classified with minimum interference impact among all predicted sounding channel resource allocation vectors for the user equipment position.

In accordance with the example embodiments as described in the paragraphs above, wherein the probability target threshold is defined based on a load of the radio access network.

In accordance with the example embodiments as described in the paragraphs above, there is determining an access network performance of the user equipment.

In accordance with the example embodiments as described in the paragraphs above, wherein there is, based on determining an access network performance of the user equipment is above a key performance indicator, targeting, locking and committing the selected radio access network resources configuration vector in a configuration of the radio access network.

In accordance with the example embodiments as described in the paragraphs above, wherein there is, based on determining an access network performance of the user equipment is below a key performance indicator target, selecting a new sounding channel resources signal configuration as a new uplink sounding channel resources vector and fallback or use new uplink sounding channel resources vector to predict a new set of interference probabilities and select a new radio access network resources configuration vector.

In accordance with the example embodiments as described in the paragraphs above, wherein the set of interference probabilities is predicted using a trained neural network comprising one input layer, one output layer and a plurality of hidden layers.

In accordance with the example embodiments as described in the paragraphs above, wherein there is training the neural network to learn the interference-based distribution for a plurality of user equipment positions.

In accordance with the example embodiments as described in the paragraphs above, wherein there is generating training data that maximizes at least a throughput data rate of a radio access network receiver performance at a specific user equipment metric position by collecting receiver performance simulation data into a data storage or collecting the inputs from access network that have been injected in receiver simulation to provide the training performance data.

In accordance with the example embodiments as described in the paragraphs above, wherein the neural network stores performance simulations for a specific sounding resource allocation vector and a user equipment position.

In accordance with the example embodiments as described in the paragraphs above, wherein the user equipment metric position comprises at least one of a path loss or signal to noise ratio as a path loss function.

In accordance with the example embodiments as described in the paragraphs above, wherein the determining is based on anomaly detection based on performance disruption of an established call configured with a given sounding channel resource allocation vector while an uplink received signal power or beam energy is measured with no user equipment radio conditions variations.

In accordance with the example embodiments as described in the paragraphs above, wherein the user equipment radio conditions variations comprise long term frequency doppler estimation measurement proving user equipment in stable static condition or in a low speed.

In accordance with the example embodiments as described in the paragraphs above, wherein the interference-based distribution is based on aggressor sounding resources vector.

In accordance with the example embodiments as described in the paragraphs above, wherein the sounding channel is used as input of an algorithm type comprising at least one of uplink timing correction, uplink synchronization, rank uplink prediction, channel estimate, or uplink beam space direction input.

In accordance with the example embodiments as described in the paragraphs above, wherein the probability of interference is based on whether there is a cyclic shift collision or whether there is power leakage from adjacent cyclic shift.

In accordance with the example embodiments as described in the paragraphs above, wherein the minimum interference is based on a smallest probability of collision of power leakage from an adjacent cyclic shift.

In accordance with the example embodiments as described in the paragraphs above, wherein the sounding resource allocation vectors comprise at least one of a sounding reference signal, a freqDomainPosition, a combOffset, or a cyclicShift vector.

In accordance with the example embodiments as described in the paragraphs above, wherein the predicting a set of interference probabilities of the feature set comprises a classification score based on a set of probabilities, wherein each probability of the set is a probability of the input data, including the feature from the set of features.

In accordance with the example embodiments as described in the paragraphs above, wherein a combination of the user equipment position and sounding resource allocation vectors with a probability of interference based on a block error rate below a key performance indicator target is chosen as a classification result causing the neural network to recognize correlations between features and optimal results.

A non-transitory computer-readable medium (Memory(ies) 125 AND/OR Memory(ies) 155 as in FIG. 6) storing program code (computer program code 123 and/or output module 140-2 AND/OR computer program code 153 and/or output module 150-2 as in FIG. 6), the program code executed by at least one processor (processor(s) 120 and/or output module 140-1 AND/OR at least one processor (Processor(s) 152 and/or output module 150-1 as in FIG. 6) to perform the operations as at least described in the paragraphs above.

In accordance with an example embodiment of the invention as described above there is an apparatus comprising: means for determining (one or more transceivers 130, Memory(ies) 125, computer program code 123 and/or output module 140-2, and processor(s) 120 and/or output module 140-1; AND/OR one or more transceivers 160, Memory(ies) 155, computer program code 153 and/or output module 150-2, and at least one processor (Processor(s) 152 and/or output module 150-1 as in FIG. 6) as in FIG. 6) a vector of uplink sounding channel resources in a cell at a user equipment position, wherein the vector of uplink sounding channel resources is associated with a sounding channel parameters configuration allocated to the user equipment for uplink transmissions; means, based on the determined vector of uplink sounding channel resources in the cell at the user equipment and a vector of uplink sounding channel resources of a neighboring cell, for predicting (one or more transceivers 130, Memory(ies) 125, computer program code 123 and/or output module 140-2, and processor(s) 120 and/or output module 140-1; AND/OR one or more transceivers 160, Memory(ies) 155, computer program code 153 and/or output module 150-2, and at least one processor (Processor(s) 152 and/or output module 150-1 as in FIG. 6) a set of interference probabilities which forms an interference-based distribution due to uplink sounding channel resources in at least one neighbor cell; and means, based on the predicted set of interference probability, for selecting (one or more transceivers 130, Memory(ies) 125, computer program code 123 and/or output module 140-2, and processor(s) 120 and/or output module 140-1; AND/OR one or more transceivers 160, Memory(ies) 155, computer program code 153 and/or output module 150-2, and at least one processor (Processor(s) 152; and/or output module 150-1 as in FIG. 6) as in FIG. 6) a radio access network resources configuration vector associated with a sounding channel resource for the user equipment to counteract uplink interference in the radio access network.

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and
(c) hardware circuit(s) and or processor(s), such as a microprocessor(s) or a portion of a microprocessor(s), that requires software (e.g., firmware) for operation, but the software may not be present when it is not needed for operation."

In accordance with example embodiments of the invention, there is adequate circuitry for performing at least novel operations in accordance with example embodiments of the invention as disclosed in this application, this "circuitry" as may be used herein refers to at least the following:
(a) hardware-only circuit implementations (such as implementations in only analog and/or digital circuitry); and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of example embodiments of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this invention could be used to advantage without the corresponding use of other features. As such, the foregoing description should be considered as merely illustrative of the principles of the invention, and not in limitation thereof.

## Claims

1. An apparatus, comprising:
at least one processor; and
at least one non-transitory memory storing instructions, that when executed by the at least one processor, cause the apparatus at least to:
determine a vector of uplink sounding channel resources (410) in a cell (1) at a user equipment position (41), wherein the vector of uplink sounding channel resources is associated with a sounding channel parameters configuration allocated to the user equipment for uplink transmissions;
based on the determined vector of uplink sounding channel resources in the cell at the user equipment and a vector of uplink sounding channel resources of a neighboring cell (2), predict a set of interference probabilities which forms an interference-based distribution due to uplink sounding channel resources in at least one neighbor cell; and
based on the predicted set of interference probability, select a radio access network resources configuration vector associated with a sounding channel resource for the user equipment to counteract uplink interference in the radio access network.

2. The apparatus according to claim 1, wherein the at least one non-transitory memory storing instructions is executed by the at least one processor to cause the apparatus to:
based on an interference probability being above a probability target threshold (430), provide a best sounding channel resource allocation vector (440) as classified with minimum interference impact among all predicted sounding channel resource allocation vectors for the user equipment position.

3. The apparatus according to claim 2, wherein the probability target threshold is defined based on a load of the radio access network.

4. The apparatus according to any one of claims 1 to 3, wherein the at least one non-transitory memory storing instructions is executed by the at least one processor to cause the apparatus to:
determine (450) an access network performance of the user equipment; and
based on determining an access network performance of the user equipment is above a key performance indicator target (460), lock and commit the selected radio access network resources configuration vector (470) in a configuration of the radio access network.

5. The apparatus according to any one of claims 1 to 3, wherein the at least one non-transitory memory storing instructions is executed by the at least one processor to cause the apparatus to:
determine (450) an access network performance of the user equipment; and
based on determining an access network performance of the user equipment is below a key performance indicator target (460), select a new sounding channel resources signal configuration as a new uplink sounding channel resources vector (424) and fallback or use the new uplink sounding channel resources vector to predict a new set of interference probabilities and select a new radio access network resources configuration vector.

6. The apparatus according to any one of claims 1 to 5, wherein the set of interference probabilities is predicted using (428) a trained neural network (400) comprising one input layer, one output layer and a plurality of hidden layers.

7. The apparatus according to claim 6, wherein the at least one non-transitory memory storing instructions is executed by the at least one processor to cause the apparatus to:
train (426) the neural network to learn the interference-based distribution for a plurality of user equipment positions.

8. The apparatus according to claim 7, wherein the at least one non-transitory memory storing instructions is executed by the at least one processor to cause the apparatus to:
generate training data that maximizes at least a throughput data rate of a radio access network receiver performance at a specific user equipment position metric by collecting receiver performance simulation data into a data storage or collecting the inputs from access network that have been injected in receiver simulation to provide the training performance data.

9. The apparatus according to claim 8, wherein the user equipment position metric comprises at least one of a path loss or signal to noise ratio as a path loss function.

10. The apparatus according to any one of claims 6 to 9, wherein the neural network stores performance simulations for a specific sounding resource allocation vector and a user equipment position.

11. The apparatus according to any one of claims 1 to 10, wherein the determining is based on anomaly detection based on performance disruption of an established call configured with a given sounding channel resource allocation vector while an uplink received signal power or beam energy is measured with no user equipment radio conditions variations.

12. The apparatus according to claim 11, wherein the user equipment radio conditions variations comprise long term frequency doppler estimation measurement proving user equipment in stable static condition or in a low speed.

13. The apparatus according to any one of claims 1 to 12, wherein the interference-based distribution is based on aggressor sounding resources vector.

14. The apparatus according to any one of claims 1 to 13, wherein the sounding channel is used as input of an algorithm type comprising at least one of uplink timing correction, uplink synchronization, rank uplink prediction, channel estimate, or uplink beam space direction input.

15. The apparatus according to any one of claims 1 to 14, wherein the probability of interference is based on whether there is a cyclic shift collision or whether there is power leakage from adjacent cyclic shift.

16. The apparatus according to any one of claims 2 to 15, wherein the minimum interference is based on a smallest probability of collision of power leakage from an adjacent cyclic shift.

17. The apparatus according to any one of claims 1 to 16, wherein the sounding resource allocation vectors comprise at least one of a sounding reference signal, a freqDomainPosition, a combOffset, or a cyclicShift vector.

18. The apparatus according to any one of claims 1 to 17, wherein the predicting a set of interference probabilities of the feature set comprises a classification score based on a set of probabilities, wherein each probability of the set is a probability of the input data, including the feature from the set of features.

19. The apparatus of claim 18, wherein a combination of the user equipment position and sounding resource allocation vectors with a probability of interference based on a block error rate below a key performance indicator target is chosen as a classification result causing the neural network to recognize correlations between features and optimal results.

20. A method, comprising:
determining (710) a vector of uplink sounding channel resources in a cell at a user equipment position, wherein the vector of uplink sounding channel resources is associated with a sounding channel parameters configuration allocated to the user equipment for uplink transmissions;
based on the determined vector of uplink sounding channel resources in the cell at the user equipment and a vector of uplink sounding channel resources of a neighboring cell, predicting (720) a set of interference probabilities which forms an interference-based distribution due to uplink sounding channel resources in at least one neighbor cell,
based on the predicted set of interference probability, selecting (730) a radio access network resources configuration vector associated with a sounding channel resource for the user equipment to counteract uplink interference in the radio access network.
